# EUROPEAN PATENT APPLICATION

(11) **EP 3 098 703 A2**
(43) Date of publication of application: **30.11.2016**
(21) Application number: 16171792.1
(22) Date of filing: 27.05.2016
(51) Int. Cl.: G06F 3/0489, G06F 3/0483, G06F 3/0484, G06F 3/0488

(54) **METHOD FOR OUTPUTTING SCREEN AND ELECTRONIC DEVICE SUPPORTING THE SAME**

(30) Priority: 29.05.2015 KR 20150076559
(71) Applicant: Samsung Electronics Co., Ltd., Gyeonggi-do 16677 (KR)
(72) Inventor: CHO, Jong Keun, 15202 Gyeonggi-do (KR); ON, Nu Ri, 16571 Gyeonggi-do (KR); CHANG, Chul Sang, 04593 Seoul (KR)
(74) Representative: Grootscholten, Johannes A.M.

(57) **Abstract**

A screen outputting method performed at an electronic device is provided. The screen outputting method includes dividing a display of the electronic device into a first area and a second area, outputting first content to the first area and outputting second content to the second area, receiving an input associated with the first area, and changing a method of outputting the second content based on an attribute of the input.

## Description

### PRIORITY

This application claims the benefit of a Korean patent application filed on May29, 2015 in the Korean Intellectual Property Office and assigned Serial number 10-2015-0076559, the entire disclosure of which is hereby incorporated by reference.

### BACKGROUND OF THE INVENTION

### 1. Field of the Invention

The present disclosure relates to a method of outputting a screen including various contents and providing a user with the screen and an electronic device supporting the same.

### 2. Background of the Invention

An electronic device such as a smartphone or a tablet personal computer (PC) performs various functions such as an image output, a wireless internet, a game, and the like. The electronic device provides a variety of information to a user through a screen, and the user executes or controls the functions through various inputs (e.g., a touch input, a swipe input, and the like).

Moreover, the electronic device includes various sensors that recognize information (e.g., vicinity brightness, information about the movement of an electronic device, information about the heart rate of a user, and the like) about surroundings of the electronic device or the user, and provides the user with various user interfaces (UIs) and user experiences (UXs) based on the recognized information.

The above-describedscreen outputting method only outputs a view generated by each application to the divided screen. Or, the screen outputting method multitasks by dividing a screen into several areas,

Moreover, the screen outputting method provides information, such as a heartbeat, a temperature, humidity, an ultraviolet (UV) index, and the like, based on a predefined setting regardless of surroundings of a user. Accordingly, content displayed on a screen is not effectively sent to a user.

The above information is presented as background information only to assist with an understanding of the present disclosure. No determination has been made, and no assertion is made, as to whether any of the above might be applicable as prior art with regard to the present disclosure.

### SUMMARY OF THE INVENTION

Aspects of the present disclosure are to address at least the above-mentioned problems and/or disadvantages and to provide at least the advantages described below.

Accordingly, an aspect of the present disclosure is to provide a screen outputting method that provides a user with a user interface (UI) for interacting with a user in real time based on the vicinity of a user and status information of a user and provides the user with various effects.

Another aspect of the present disclosure is to provide a screen outputting method that provides an image conversion effect such as a blending effect to a specific image based on an interaction with a user.

In accordance with an aspect of the present disclosure, a screen outputting method performed at an electronic device is provided. The screen outputting method includes dividing a display of the electronic device into a first area and a second area, outputting a first content to the first area and outputting a second content to the second area, receiving an input associated with the first area, and changing a method of outputting the second content based on an attribute of the input.

In accordance with an aspect of the present disclosure, an electronic device is provided. The electronic devices includes a display, a memory, and a processor electrically connected to the display and the memory,the processor configured to divide an area of the display into a first area and a second area,output a first content to the first area, output a second content to the second area, andchange a method of outputting the second content based on an attribute of the input if an input associated with the first area is received.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a diagram illustrating an electronic device in a network environment according to various embodiments of the present disclosure;
FIG. 2 is a flow chart illustrating a screen outputting method according to various embodimentsof the present disclosure;
FIG. 3 is a view illustrating a change of a method of outputting a second content according to various embodimentsof the present disclosure;
FIG. 4 is a view illustrating a composition and a masking procedure according to various embodimentsof the present disclosure;
FIG. 5 is a view illustrating a screen outputting method by a blurring according to various embodimentsof the present disclosure;
FIG. 6 is a view illustrating a screen outputting method according to an addition of information, according to various embodimentsof the present disclosure;
FIG. 7 is a flow chart illustrating a composition method according to various embodimentsof the present disclosure;
FIG. 8 is a diagram illustrating a card-type user interface (UI) according to various embodimentsof the present disclosure;
FIG. 9 is a view illustrating a screen switch according to various embodimentsof the present disclosure;
FIG. 10 is a view illustrating a screen switch of a folding type according to various embodimentsof the present disclosure;
FIG. 11 is a block diagram illustrating an electronic device according to various embodimentsof the present disclosure; and
FIG. 12 is a block diagram of a program module according to various embodimentsof the present disclosure.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the disclosure disclosed herein, the expressions "have", "may have", "include" and "comprise", or "may include" and "may comprise" used herein indicate existence of corresponding features (e.g., elements such as numeric values, functions, operations, or components) but do not exclude presence of additional features.

In the disclosure disclosed herein, the expressions "A or B", "at least one of A or/and B", or "one or more of A or/and B", and the like used herein may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used herein may refer to various elements of various embodiments of the present disclosure, but do not limit the elements. For example, such terms do not limit the order and/or priority of the elements. Furthermore, such terms may be used to distinguish one element from another element. For example, "a first user device" and "a second user device" indicate different user devices. For example, without departing the scope of the present disclosure, a first element may be referred to as a second element, and similarly, a second element may be referred to as a first element.

It will be understood that when an element (e.g., a first element) is referred to as being "(operatively or communicatively) coupled with/to" or "connected to" another element (e.g., a second element), it may be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there are no intervening element (e.g., a third element).

According to the situation, the expression "configured to" used herein may be used as, for example, the expression "suitable for", "having the capacity to", "designed to", "adapted to", "made to", or "capable of". The term "configured to" must not mean only "specifically designed to" in hardware. Instead, the expression "a device configured to" may mean that the device is "capable of" operating together with another device or other components. For example, a "processor configured to (or set to) perform A, B, and C" may mean a dedicated processor (e.g., an embedded processor) for performing a corresponding operation or a generic-purpose processor (e.g., a central processing unit (CPU) or an application processor (AP)) which performs corresponding operations by executing one or more software programs which are stored in a memory device.

Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal detect unless expressly so defined herein in various embodiments of the present disclosure. In some cases, even if terms are terms which are defined in the specification, they may not be interpreted to exclude embodiments of the present disclosure.

An electronic device according to various embodiments of the present disclosure may include at least one of smartphones, tablet personal computers (PCs), mobile phones, video telephones, electronic book readers, desktop PCs, laptop PCs, netbook computers, workstations, servers, personal digital assistants (PDAs), portable multimedia players (PMPs), Moving Picture Experts Group phase 1 or phase 2 (MPEG-1 or MPEG-2) audio layer 3 (MP3) players, mobile medical devices, cameras, or wearable devices. According to various embodiments, the wearable device may include at least one of an accessory type (e.g., watches, rings, bracelets, anklets, necklaces, glasses, contact lens, or head-mounted-devices (HMDs), a fabric or garment-integrated type (e.g., an electronic apparel), a body-attached type (e.g., a skin pad or tattoos), or an implantable type (e.g., an implantable circuit).

According to an embodiment of the present disclosure, the electronic device may be a home appliance. The home appliances may include at least one of, for example, televisions (TVs), digital versatile disc (DVD) players, audios, refrigerators, air conditioners, cleaners, ovens, microwave ovens, washing machines, air cleaners, set-top boxes, a home automation control panel, a security control panel, TV boxes (e.g., Samsung HomeSyncTM, Apple TVTM, or Google TVTM), game consoles (e.g., XboxTM and PlayStationTM), electronic dictionaries, electronic keys, camcorders, or electronic picture frames.

According to an embodimentof the present disclosure, the electronic devices may include at least one of medical devices (e.g., various portable medical measurement devices (e.g., a blood glucose monitoring device, a heartbeat measuring device, a blood pressure measuring device, a body temperature measuring device, and the like)), a magnetic resonance angiography (MRA), a magnetic resonance imaging (MRI), a computed tomography (CT), scanners, and ultrasonic devices), navigation devices, global positioning system (GPS) receivers, event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller's machines (ATMs), points of sales (POSs), or internet of things (e.g., light bulbs, various sensors, electric or gas meters, sprinkler devices, fire alarms, thermostats, street lamps, toasters, exercise equipment, hot water tanks, heaters, boilers, and the like).

According to an embodimentof the present disclosure, the electronic devices may include at least one of parts of furniture or buildings/structures, electronic boards, electronic signature receiving devices, projectors, or various measuring instruments (e.g., water meters, electricity meters, gas meters, or wave meters, and the like). According to various embodiments, the electronic device may be one of the above-described devices or a combination thereof. An electronic device according to an embodiment may be a flexible electronic device. Furthermore, an electronic device according to an embodiment of the present disclosure may not be limited to the above-described electronic devices and may include other electronic devices and new electronic devices according to the development of technologies.

Hereinafter, electronic devices according to various embodiments will be described with reference to the accompanying drawings. In the present disclosure, the term "user" may refer to a person who uses an electronic device or may refer to a device (e.g., an artificial intelligence electronic device) that uses an electronic device.

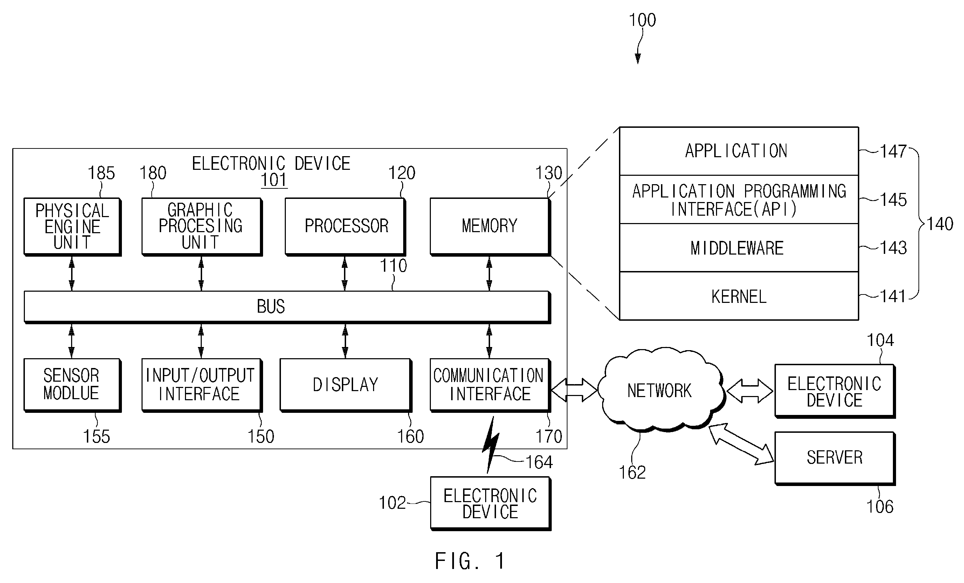

FIG. 1 is a diagram illustrating an electronic device in a network environment according to various embodiments of the present disclosure.

Referring to FIG. 1, there is illustrated the electronic device 101 in a network environment 100 according to various embodiments of the present disclosure. The electronic device 101 may include a bus 110, a processor 120, a memory 130, an input/output (I/O) interface 150, a sensor module 155, a display 160, a communication interface 170, a graphics processing unit (GPU) 180 and a physical engine unit 185. According to an embodiment of the present disclosure, the electronic device 101 may not include at least one of the above-described components or may further include other component(s).

For example, the bus 110 may interconnect the above-described components 110, 120, 130, 150, 155, 160, 170, 180 and 185 and may be a circuit for conveying communications (e.g., a control message and/or data) among the above-described components.

The processor 120 may include one or more of a CPU, an AP, or a communication processor (CP). For example, the processor 120 may perform an arithmetic operation or data processing associated with control and/or communication of at least other components.

According to various embodimentsof the present disclosure, the processor 120 may control the function of the electronic device 101 by a user input received from the I/O interface 150 or sensing information collected from the sensor module 155.

For example, the processor 120 may perform an operation for processing information about the state of the electronic device 101, the state of a user, or the state of surroundings associated with the electronic device 101 or a user and may store the information in the memory 130. The processor 120 may determine content to be outputted to a user through the display 160 based on information (e.g., information about a user, user input information, and the like) stored in the memory 130.

According to various embodimentsof the present disclosure, the processor 120 may execute a preprocessing (e.g., processing one or more of a noise removal, a segmentation, a signal standardization, and a feature extraction) with respect to a motion signal or a biometric signal received through the sensor module 155 such as a motion sensor, a biometric information sensor, and the like and may determine the health state or the emotional state of a user, a kind of motion, or a quantity of motion based on a signal analysis (e.g., an analysis based on one or more of an artificial intelligence, a decision tree, a pattern recognition, and a user activity recognition).

The memory 130 may include a volatile and/or nonvolatile memory. The memory 130 may store instructions or data associated with at least one other component(s) of the electronic device 101. According to an embodiment, the memory 130 may store software and/or a program 140. The program 140 may include, for example, a kernel 141, a middleware 143, an application programming interface (API) 145, and/or an application program (or an application) 147. At least a part of the kernel 141, the middleware 143, or the API 145 may be called an "operating system (OS)".

For example, the kernel 141 may control or manage system resources (e.g., the bus 110, the processor 120, the memory 130, and the like) that are used to execute operations or functions of other programs (e.g., the middleware 143, the API 145, and the application program 147). Furthermore, the kernel 141 may provide an interface that allows the middleware 143, the API 145, or the application program 147 to access discrete components of the electronic device 101 so as to control or manage system resources.

The middleware 143 may perform a mediation role such that the API 145 or the application program 147 communicates with the kernel 141 to exchange data.

Furthermore, the middleware 143 may process task requests received from the application program 147 according to a priority. For example, the middleware 143 may assign the priority, which makes it possible to use a system resource e.g., the bus 110, the processor 120, the memory 130, or the like of the electronic device 101, to at least one of the application program 147. For example, the middleware 143 may process the one or more task requests according to the priority assigned to the at least one, which makes it possible to perform scheduling or load balancing on the one or more task requests.

The API 145 may be, for example, an interface through which the application program 147 controls a function provided by the kernel 141 or the middleware 143, and may include, for example, at least one interface or function e.g., an instruction for a file control, a window control, image processing, a character control, or the like.

The I/O interface 150 may transmit an instruction or data, input from a user or another external device, to other component(s) of the electronic device 101. Furthermore, the I/O interface 150 may output an instruction or data, received from other component(s) of the electronic device 101, to a user or another external device. The I/O interface 150 may receive information received by an input action (through a touch sensor, a button, a key, a stylus pen) of a user.

For example, the I/O interface 150 may receive, from a user, health care goals (e.g., one or more of a quantity of motion, a weight loss, and frequency of workout according to a kind of workout) that a user wants to achieve, a schedule, a telephone number, and the like.

According to various embodimentsof the present disclosure, the I/O interface 150 may receive one or more of a scroll (or swipe) input for displaying one or more contents (e.g., a web page or a document) displayed through the display 160, a display location transition through a scroll or a drag in a list (e.g.,a music list, a video list, or the like) displaying several items, a command (e.g., one or more of a touch, a flick, a drag, a three dimensional (3D) gesture input, a voice input, an eye tracking, and tracking a face direction) for shifting a display location to display other parts in the case where a part of a virtual page is displayed on a display, and an input through a user interface (UI) for displaying another page, card, or dashboard in content (e.g., an electronic book and Samsung S-Health application 4.0) implemented in the form of several pages, a card, or a dashboard.

According to various embodimentsof the present disclosure, the I/O interface 150 may detect an input signal (e.g., an input location, an input gesture, an input through writing, a button input, a hovering signal input) through a touch sensor, a key input, a sensor, a stylus pen, an input device. Moreover, the I/O interface 150 may detect a shock, a vibration, a knock action, and the like through a shock sensor, a vibration sensor (e.g., an acceleration sensor, a microphone, and a pressure sensor).

The sensor module 155 may include one or more sensors for measuring the state of a portable device, the state of a user, or the state of surrounding associated with a user. The sensor module 155 may include a motion sensor, an environment sensor, a location sensor, a biometric information sensor, an integrated sensor, and the like.

The motion sensor may detect one or more of the motion, a pose, or a directional orientation of a device or a user. The motion sensor may include one or more of an inertial sensor, an angular velocity or acceleration sensor, a proximity sensor, a gyroscope, a magnetic sensor, a light sensor, a red, green, blue (RGB) camera, an infrared (IR) camera, a Kinect, a pressure sensor, a directional wireless signal detector, an IR light emitting diode (LED), and a touch sensor.

For example, the motion sensor may detect the pose or the motion of a user. The direction of a display may be determined according to the recognition result of the motion sensor, and the display direction of content displayed on the display may be determined (e.g., a portrait mode or a landscape mode). According to an embodiment, the electronic device 101 may include a head-mounted device (HMD) or a digital globe mounting a motion sensor or an eye tracker and may detect the motion of the head of a user, a line of sight, and a gesture input of the hand or the arm of the user.

The environment sensor may measure the environment state of the vicinity of a device or a user. The environment sensor may include one or more of an illuminance sensor, a gas sensor, a particulate sensor, a barometer sensor, a humidity sensor, a temperature meter, an ultraviolet (UV) sensor, a microphone, a dosimeter, an ozone detector, and a time sensor.

To determine the location of a device or a user, the location sensor may include one or more of a GPS/global navigation satellite system (GNSS) sensor, a wireless communication-based wireless localization sensor (e.g., one or more of a cell-ID, a time of arrival (ToA), a time difference of arrival (TDoA), and an angle of arrival (AoA) method sensor), and an indoor localization sensor (e.g., a Wi-Fi fingerprint, a near field communication (NFC), a radio-frequency identification (RFID), a pedometer, a camera, an image marker recognition device, an image code recognition device, an infrared sensor, a ultrasonic sensor, and anultra wide band (UWB)). Moreover, to detect an altitude or the change of an altitude, the location sensor may include a barometer.

The biometric information sensor may measure the health state or the emotion state of a user. The biometric information sensor may include a pedometer, a sphygmomanometer, a blood glucose meter, a photoplethysmography (PPG) sensor, an electrocardiogram (ECG) sensor, an electromyography sensor (EMG) sensor, an electroencephalogram (EEG) sensor, a blood volume pulse (BVP) sensor, a saturation of peripheral oxygen (SPO2) sensor, a galvanic skin response (GSR) sensor, a skin conductivity (SC) sensor, an obesity meter, a body temperature sensor, a skin temperature sensor, a respiration meter, a gas sensor, and the like. Moreover, the biometric information sensor may include a fingerprint sensor, an iris recognition sensor, a face recognition reader, a hand geometry reader, a hand vein reader, a speech recognition reader, a handwriting signature recognizer for recognizing a personal and biometric feature of a user and may further include a camera, an IR camera, a touch sensor, a microphone, and the like.

The biometric information sensor may collect a biometric signal being raw data for measuring one or more of a blood pressure, a blood flow, a heart rate (e.g., a heart rate monitor (HRM) and a heart rate variability (HRV)), a body temperature, a respiratory rate, an oxygen saturation, a cardio tone, a glucose, a waist circumference, a height, a weight, a body fat, a calorie consumption, an EEG, a voice, a skin resistance, an EMG, an ECG, a gait, an ultrasound image, a sleep, the look of a face (e.g., a face), a dilated pupils, and an eye blinking of a user. The biometric information sensor, the sensor hub or the processor 120 may analyze the biometric signal, extracting biometric feature information. For example, the processor 120 may determine a pulse wave signal obtained through an HRV sensor as a biometric signal, may obtain primary biometric feature information such as an average heart rate, a heartbeat distribution, and the like based on the analyzing of the biometric signal, and may obtain secondary biometric feature information such as a stress state and a vascular aging, which is high-level information, based on the processing of the biometric feature information.

The biometric information sensor may simply output a collected user biometric signal or may analyze the biometric signal through the processor 120, outputting the biometric feature information. Accordingly, the biometric signal collected through the biometric information sensor may be sent and analyzed to a body control unit coupled to a sensor, a sensor hub collecting and processing signals of various sensor units, each of which includes the biometric information sensor, or the processor 120 of the electronic device 101, in which a sensor device is embedded, and may be used to generate the biometric feature information. For example, a mobile phone in which an ECG sensor is embedded may be used. Moreover, in a wristwatch in which a PPG sensor is embedded, each device in which a biometric information sensor, a sensor hub, or the processor 120 is embedded may be used to generate the biometric feature information.

According to an embodimentof the present disclosure, after the electronic device 101sends a biometric signal to a remote device (e.g., a wearable device, an accessory device, a smartphone, a home appliance, or the like) or a server through a wired or wireless network, the control unit of the remote device or the server may process the biometric signal, generating the biometric feature information.

According to an embodimentof the present disclosure, if the electronic device 101 generates primary biometric feature information and sends the biometric feature information to the remote device or the server, secondary biometric feature information may be extracted by the remote device or the server.

According to an embodimentof the present disclosure, the biometric signal collected by a HRV sensor embedded in a wristwatch device may be sent to a smartphone (e.g., a host) connected to the wristwatch device based on a wireless method. The smartphone may analyze the received biometric signal, extracting the biometric feature information. The biometric feature information may be sent through a wireless method such that the biometric feature information is displayed on the smartphone or on the screen of a wristwatch device. Accordingly, the biometric feature information may be displayed on one or more of a smartphone and a wristwatch device.

The integrated sensor may sense two or more information based on one sensor. For example, the acceleration sensor may measure the motion of a user and the number of steps at the same time. For another example, the PPG sensor may be used as a sensor of biometric information such as a heart rate and a stress and may be used as a proximity sensor based on an amount of light thus received. For another example, the ECG sensor may detect an emotional recognition through the ECG analysis of a user, a heart rate, and an HRV, and may be used as an authentication for distinguishing a user.

According to various embodimentsof the present disclosure, the sensor module 155 may always operate while the electronic device 101 is powered-on. According to an embodiment, the sensor module 155 may be driven according to an input (e.g., a key input, button input, graphical UI (GUI) input, or gesture recognition) of a user according to various embodiments, the sensor module 155 may be embedded in the electronic device 101, may be embedded in another electronic device, or may be mounted in an external environment (e.g., an indoor space, an outdoor space, a building, a base station, or the like).

The display 160 may include, for example, a liquid crystal display (LCD), an LED display, an organic LED (OLED) display, a microelectromechanicalsystems (MEMS) display, or an electronic paper display. The display 160 may display, for example, various contents (e.g., a text, an image, a video, an icon, a symbol, and the like) to a user. The display 160 may include a touch screen and may receive, for example, a touch, gesture, proximity, or hovering input using an electronic pen or a part of a user's body.

According to various embodimentsof the present disclosure, the display 160 may display content processed by the GPU 180, allowing a user to recognize the content.

The electronic device 101 may provide a user with output information (e.g., an animation, an audio, a sound, a tactile feedback, or a force feedback) through an image, a sound, or a vibration transmitted by an output device such as the display 160 and an audio device (now shown).

The communication interface 170 may establish communication between the electronic device 101 and an external electronic device (e.g., a first external electronic device 102, a second external electronic device 104, or a server 106). For example, the communication interface 170 may be connected to a network 162 through wireless communication or wired communication to communicate with an external device (e.g., the second external electronic device 104 or the server 106).According to various embodiments, the electronic device 101 may recognize a signal for detecting whether a wireless/wired device is connected to the electronic device 101, through the communication interface 170.

The wireless communication may include at least one of, for example, long-term evolution (LTE), LTE advanced (LTE-A), code division multiple access (CDMA), wideband CDMA (WCDMA), universal mobile telecommunications system (UMTS), wireless broadband (WiBro), or global system for mobile communications (GSM), or the like, as cellular communication protocol. Furthermore, the wireless communication may include, for example, a local area network 164. The local area network 164 may include at least one of, for example, a Wi-Fi, a Bluetooth, an NFC, a GNSS, or the like. The GNSS may include at least one of a GPS, a global navigation satellite system (GLONASS), BeiDounavigation satellite system (hereinafter referred to as "BeiDou"), or the European global satellite-based navigation system (Galileo). In this specification, "GPS" and "GNSS" may be interchangeably used. The wired communication may include at least one of, for example, a universal serial bus (USB), a high definition multimedia interface (HDMI), a recommended standard-232 (RS-232), or a plain old telephone service (POTS). The network 162 may include at least one of telecommunications networks, for example, a computer network (e.g., a local area network (LAN) or a wide area network (WAN)), an Internet, or a telephone network.

Each of the external first and second external electronic devices 102 and 104 may be a device of which the type is different from or the same as that of the electronic device 101. According to an embodiment of the present disclosure, the server 106 may include a group of one or more servers. According to various embodiments, all or a part of operations that the electronic device 101 may perform may be executed by another or plural electronic devices e.g., the first and second electronic devices 102 and 104 and the server 106.

According to an embodimentof the present disclosure, in the case where the electronic device 101 executes any function or service automatically or in response to a request, the electronic device 101 may not perform the function or the service internally, but, alternatively additionally, it may request at least a portion of a function associated with the electronic device 101 from other devices (e.g., the first and second electronic devices 102 and 104 and the server 106). The other electronic device (e.g., the first electronic device 102,the second electronic device 104 or the server 106) may execute the requested function or additional function and may transmit the execution result to the electronic device 101. The electronic device 101 may provide the requested function or service using the received result or may additionally process the received result to provide the requested function or service. To this end, for example, cloud computing, distributed computing, or client-server computing may be used.

The GPU 180 may perform an arithmetic operation associated with the output of the display 160. In FIG. 1, it is illustrated that the GPU 180 and the processor 120 are divided. However, embodiments disclosed herein may not be limited thereto.At least a part of the GPU 180 may be implemented to be included in the processor 120.

According to various embodiments, the GPU 180 may include at least one or more of a rendering unit and an animation unit. The rendering unit may substantially provide the display 160 with a result. For example, to display a vivid 3D-graphic image on the display 160, the rendering unit may change the 3D-graphic image into two dimensional (2D)-graphic image such that the 2D-graphic image is suitable for the attribute (e.g., a resolution, a refresh rate, a color model, or the like) of the display 160. Alternatively, the rendering unit may only generate an area to be displayed on the display 160 from a source image, sending data of the generated area to the display 160 (e.g., a display buffer).

The animation unit may provide an effect to an object provided to the display 160. According to an embodiment, the animation unit may generate the change rate, the change range, the change speed, the change effect, and the like of a UI for providing corresponding information based on a statistical value (e.g., a maximum value, a minimum value, a mean value, an intermediate value, a frequency count, a variance, a standard deviation, or the like) of a sensor information measured by the sensor module 155.

According to an embodimentof the present disclosure, the animation unit may calculate the attribute for an object transformation. The attribute for an object transformation may include a location attribute (e.g., top, left, or bottom), a size attribute (e.g., a width or a height), a box attribute (e.g., a margin or a padding), a border attribute (e.g., a border-width, a border-radius, or a border-color), a color attribute (e.g., a color or a background-color), a transparency attribute (e.g., opacity), a transformation attribute (e.g., a transform), and the like. According to an embodiment, the animation unit may be connected with the physical engine unit 185 and may operate.

When an object is provided to the screen of a portable device, the physical engine unit 185 may calculate a physical computation based on a movement path of an object. The physical engine unit 185 may include at least one or more physical quantities among gravity, speed, acceleration, friction force, gravitational pull, elastic force, and the like and may perform an arithmetic operation with respect to the physical quantities. In FIG. 1, it is illustrated that the physical engine unit 185 and the GPU 185 are separately formed. However, embodiments disclosed herein may not be limited thereto.The physical engine unit 185 may be implemented to be included in the processor 120 or the GPU 180.

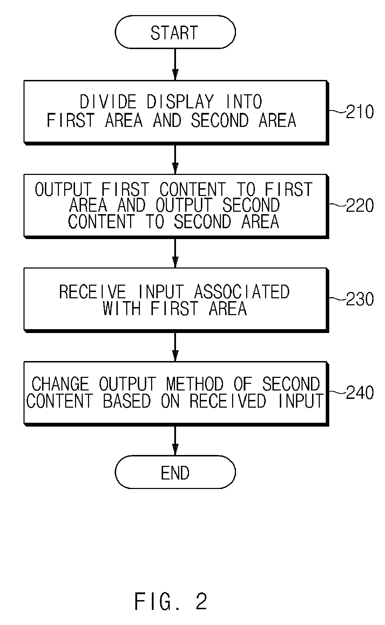

FIG. 2 is a flow chart illustrating a screen outputting method according to various embodiments of the present disclosure.

Referring to FIG. 2, in operation 210, the GPU 180 may divide the display 160 of the electronic device 101 into a plurality of areas. The areas may be configured to output different contents or to output contents associated with each other. Below, it is described that the GPU 180 divides the display 160 into two areas (e.g., a first area and a second area). However, embodiments disclosed herein may not be limited thereto.

The first area may be an area in which at least one or more operations (e.g., a scroll or a page shift) are directly performed by an input through a UI.

According to an embodimentof the present disclosure, the first area may be an area in which at least a part of first content (e.g., a list, a map, a document, or a social networking service(SNS) feed) is displayed, and the second area may be an area in which at least a part of second content (e.g., an image or a video) is displayed.

According to an embodimentof the present disclosure, the second area may be arranged to be adjacent to the first area or may be arranged to be overlapped with the first area. In the case where the second area is overlapped with the first area, the second content and contents of a part, of which the second area is overlapped with the first area, from among the first contentmay be combined based on a convolution operation.

According to various embodimentsof the present disclosure, the GPU 180 may set attributes (e.g., a size, a location, a ratio, and a shape) associated with locations of the first and second areas.

The GPU 180 may determine a size and a first location of each of the first area and the second area so as to have a default value. For example, when a designated list is displayed, the GPU 180 may display the starting point of the list on the first area and may set a location-based attribute of the second area to the default value. For another example, the GPU 180 may store information associated with a display end (or pause) point of the list and attribute information associated with the location of the second area. Afterwards, when the list is again displayed, the GPU 180 may recover the size and the location of each of the first area and the second area based on the stored information.

The GPU 180 may set the locations of the first area and the second area by a user input. The user may determine the size and the location of the second area to be set on a screen. The GPU 180 may display a screen, which allows a user to select a location and a size, from among several template candidates. Moreover, the GPU 180 may allow a user to directly set a location and a size (e.g., selecting a shape, adjusting a size/location, and the like) through a UI.

The GPU 180 may automatically set the location and the size of each area based on contents of the first area and the second area. For example, the GPU 180 may determine the location or the size of the first area or the second area based on the size, the ratio, and the location of content to be displayed and the size, the ratio, and the like of a display area of the display 160. For another example, the GPU 180 may determine a size and a ratio based on an attribute of content to be displayed on the second area and may set the second area such that the greatest element among elements of content to be displayed on the first area is displayed. For another example, the GPU 180 may allow the greatest image in a document displayed on the first area to be displayed on the second area. For another example, when a scroll generated according to a user input moves from a current location to a specific location, the GPU 180 may set one or more of the size, the ratio, and the location of the second area based on the current location and the specific location such that an item, of which the size is greatest, from among list items of first content is displayed on the second area.

In operation 220, the GPU 180 may output the first content to the first area and may output the second content to the second area. According to various embodiments, the first content and the second content may be different from each other. For example, the first content may indicate a screen for representing current weather obtained by a weather application, and the second content may be a screen for searching for news through an internet browser.

The first content to be displayed on the first area may include one or more of a list, a grid view, a card, a dashboard, and a tile. On the basis of a user input, at least a part of an area about the first content may be scrolled up or down or shifted in units of pages.

According to an embodimentof the present disclosure, an application such as an SNS application (e.g., Facebook and Twitter), news articles (e.g., FlipboardTM), an image list, an album list, a music list, a thumbnail list, S-Health 4.0, a map image, and the like may be displayed on the first area, and a part to be displayed on the first area may be changed according to a user input. For example, in the case of an application outputting a list, an item, which is displayed on the first area, from among the all items of the list may be changed based on a scroll or a flick. Moreover, in the case of a map, a part of the map displayed through the first area may be changed by a drag or a flick.

The second area may be an area in which at least a part of the second content is displayed, and the second content may include at least one or more of an image, a text, and a symbol. Content displayed on the second area of which at least a part is changed according to a user input associated with the first area may be displayed.

According to various embodimentsof the present disclosure, the second content displayed on the second area may be a default image or an image selected by a user. Moreover, the second content may be automatically set based on content arranged on the first area or candidate contents to be arranged on the first area. For example, the second content may be 1) content displayed on the current first area or content arranged to be adjacent to the content, 2) elements (e.g., an image, a document, a paragraph, and the like) adjacent to the up, down, left, and right sides of a content element displayed on the first area, 3) a representative image or an associated image thus found, based on an event for each specific time (e.g., weekly, daily, or monthly), 4) a picture image of a filming site during a corresponding month right after a travel or an image recommended by searching for a representative image associated with a travel area, 5) an image associated with a current time (e.g., a morning, a day, an evening, a night, or the like), a day of the week, a season, or the like, 6) information about a previous event that occurred on a corresponding anniversary in the case of a specific anniversary, 7) an image that is lastly uploaded to a relevant application and an image (e.g., a displayed image, a pause image of a video, or an image extracted from ID3Tag, or the like - album image of a music) based on the consumption pattern of a previous content, 8) an image, which is most frequently displayed, from among images in contents arranged on the first area, 9) content of selecting or analyzing a representative keyword based on a keyword associated with contents in the first area, 10) an image associated with content, which is designated according to a user input, from among contents in the first area, 11) a selected (e.g., a touch hold, or a hovering) specific image of several images in the first area, 12) an image associated with a corresponding travel area in the case where the image of a travel area is selected, 13) a relevant image or album image on a local or network based on a search engine, 14) an image, or the like based on a keyword such as metadata (e.g., a location, a keyword, or the like based on an Exif tag, an ID3Tag, or the like), a title, or the like. The second content may be randomly set according to a search result and may be set to an image that are most frequently displayed.

In operation 230, the GPU 180 may receive an input associated with the first area. The input may include an input (e.g., a swipe operation, a touch operation, or the like) by a user or an input corresponding to information collected through the sensor module 155 included in the electronic device 101.

According to various embodimentsof the present disclosure, the input may be generated in both the first area and the second area, and thus the change (e.g., the change of an area displayed based on a scroll or a page shift) of the first content displayed on the first area may occur. According to an embodiment, only an input that is generated in the first area may be valid. According to an embodiment, the input may be valid whenever generated in the second area.

The input may be generated through a specific UI in the first area, the second area or another area. A GUI being one of interfaces for an input may be a scroll bar, an on screen display (OSD), a slider bar, or the like, and a hardware device for an input may be a button, a key, or the like. According to an embodiment, the input may include one or more of an eye track, a voice input, or a gesture, a pose, or a motion by a motion sensor.

The GPU 180 may generate the change of content displayed on the first area based on biometric information (e.g., a heartbeat, a stress, an emotion, a quantity of motion, or a body temperature) of a user. According to an embodiment, the GPU 180 may detect biometric information of a user through a wearable device such as a smart watch, a smart glass, or the like and may change the attribute (e.g., a length, a size, contents, a page, color, or the like) of content displayed on the first area based on the biometric information. For example, in the case where a health care application is displayed on the first area, a heartbeat tile, a quantity of motion tile, a nutrition tile, and the like constituting a health care application may be outputted as a list shape. In the case where a part of the tiles is displayed on the first area, a tile that is newly updated or has relatively important information may be displayed to be automatically scrolled up or down or shifted in units of pages.

In operation 240, the GPU 180 may change amethod of outputting the second content in the second area based on the input.

The method of outputting the second content may be a method in which the second content increases or decreases according to the input or in which the display level of the second content is determined according to the input. The method of outputting the second content may include one or more of a location-based attribute (e.g., a size attribute, a location attribute, a shape attribute, or a geometric processing attribute), an image conversion attribute (e.g., an image filtering attribute, a composition attribute, or information about a masking).

According to various embodimentsof the present disclosure, the method of outputting the second content may include the change of weather information and theme information. With the above description, one or more of an image filtering, a composition, and a masking operation may be performed based on weather information, user theme information or view area attribute information.

For example, the user may shift(or scroll) an internet news or the screen of Facebook in the first area based on a swipe operation from bottom to top.

In the case where the swipe input is generated in the first area, the GPU 180 may scroll down the first content (e.g., an SNS, internet news, or the like) of the first area based on the direction or the speed of a swipe input.

The GPU 180 may change the method of outputting the second content (e.g., a background screen, an address book, or the like) outputted to the second area based on the swipe input. The GPU 180 may allow the whole second area to gradually blur based on the swipe input or the whole size of the first area to decrease in the vertical direction.

For another example, the GPU 180 may allow the size of the second area to gradually decrease in the vertical direction based on the swipe input. The GPU 180 may allow the first area to gradually increase and the second area to gradually decrease by shifting a boundary line between the first area and the second area to the direction of the second area.

The GPU 180 may sharpen an area (e.g., a first area), which a user wants to watch or to highlight, on a screen and may process an area (e.g., a second area) which is not an interest area of a user such that the area decreases or does not appear.

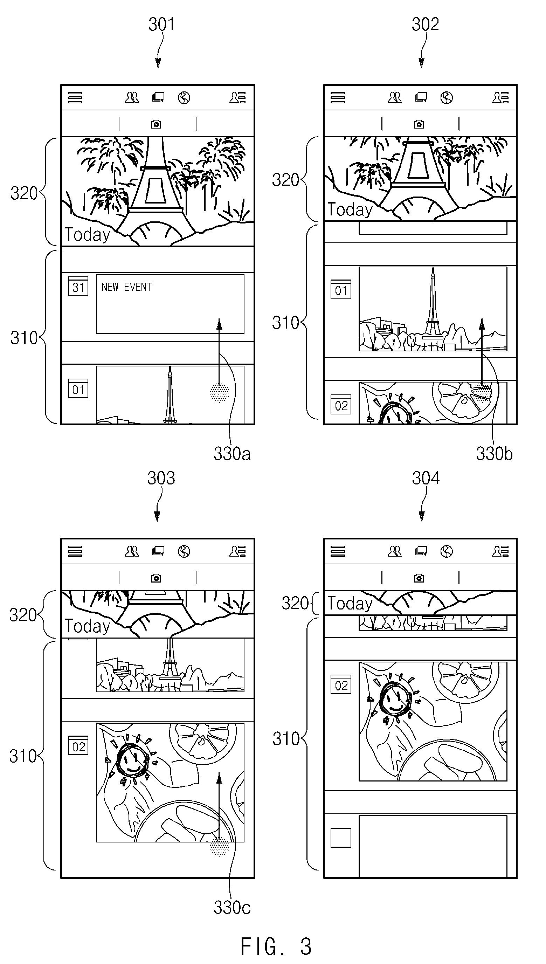

FIG. 3 is a view illustrating a change of a method of outputting a second content according to various embodimentsof the present disclosure. In FIG. 3, it is illustrated that the size of the second area in the vertical direction is changed. However, embodiments disclosed herein may not be limited thereto.

Referring to FIG. 3, each of screens 301 to 304 may be divided into a plurality of areas. The plurality of areas may output different contents. The contents may be generated by one application,or outputted by a plurality of applications.

In the screens 301 to 304, it is illustrated that a first area 310 is arranged on the lower portion of a second area 320 in the case where the swipe input of a user is generated in the first area 310. However, embodiments disclosed herein may not be limited thereto.

In the screen 301, a user may generate a first input 330a on the first area 310. The GPU 180 may verify an attribute (e.g., an input direction - screen from bottom to top, an input speed- normal of slow/normal/fast, an input length - a distance from a starting point to an end point of a swipe input, or the like) of the first input 330a.

In the screen 302, the first content (e.g., an internet news, the screen of Facebook, or the like) displayed on the first area 310 may be scrolled according to the first input 330a. The size of the second area 320 may vertically decrease due to the first input 330a.

In the case of an area (e.g., the first area 310) in which a user currently has an interest or that a user highlights, a weight of which the area is occupied in the whole screen may gradually increase and the size of an area (e.g., the second area 320) in which a user does not currently have an interest may gradually decrease.

In the screens 302 and 303, in the case where a user generates a second input 330b, the GPU 180 may decrease the second area 320 such that the second area 320 is smaller than the first area 310 based on the attribute of the second input 330b.

In the screens 303 and 304, in the case where a user generates a thirdinput 330c, the GPU 180 may decrease the second area 320 such that the second area 320 is smaller than the first area 310 based on the attribute of the third input 330c. In this case, the second area 320 may be changed into a minimum size (e.g., a line shape). Even though a user additionally swipes the first area 310, the second area 320 may be maintained to a minimum size. According to various embodiments, in the case where a user separately touches the second area 320 when the second area 320 is minimized, the second area 320 may be expanded to a designated size.

According to various embodimentsof the present disclosure, in the case where a user cancels a swipe operation or generates a swipe operation in the inverse direction (i.e., from top to bottom), the second area 320 may return to an existing size.

According to various embodiments, a location attribute (e.g., a size, a display range, a display location, or the like) of the second area 320 may be changed according to the change (e.g., a distance, a ratio of a displayed area, or the like) of the first content changed according to a user input. For example, the change of an image location attribute may be set based on location-based information (e.g., the location or the ratio of a current display location in the total length of the first content, a distance from the starting point of the first content to a current display location, or the like) of content displayed on the first area.

According to various embodimentsof the present disclosure, in the screen 301, the second area 320 may be set based on a size and a location in an initial state of a list. In the screens 302 to 304, the size and the location of the second area may be changed according to a user input (e.g., a scroll, a dragging, or a flick) or the change of the first content (i.e., the change corresponding to a user input).

According to an embodimentof the present disclosure, the size of the second area 320 may be set to the maximum size or the minimum size based on the starting location or the end location of the first content, and the size of the second area 320 or the size of content of the second area 320 may be adjusted according to the display location of the first content.

For example, as illustrated in the screen 301, in the case where the initial location of content is displayed (i.e., in the case where the top portion of the first content is displayed), the size of the second area 320 may be maximally set and the range of the second content displayed through the second area 320 may be the whole area. On the other hand, in the case where the lowest end of the first content is displayed on the first area 310, the size of the second area 320 may be set to the minimum size.

According to an embodimentof the present disclosure, if a scroll operation is performed in the first area by the input of a user, the maximum and minimum sizes of the second area may be determined according to the location of the first content displayed on the first area 310. As a scroll-up operation is performed on the first area, the size of the second area 320 may decrease. As a scroll-down operation is performed on the first area, the size of the second area 320 may increase. A user may determine the relative location of the current first content based on the size of the second area. For example, the size of a part of content (e.g., text "Today") of the second area may be changed according to a user input. Additionally, the size of another part of the second content may be maintained.

According to an embodimentof the present disclosure, the display range of the second content through the second area 320 may be changed (e.g., displaying a partial area or increasing/decreasing a partial area)according to the content display area of the first area 310 by a user input. For example, in the screen 301, if the display area of the first content displayed through the first area 310 is changed as a scroll is performed, as illustrated in the screens 302 to 304, the second area 320 may gradually decrease on the top portion of an image. According to an embodiment, the size of the second area 320 may not be changed, and a part of the second content may increase or decrease according to the control result of the first area 310 based on to a user input. Accordingly, the second area 320 may be filled with a part of the second content. While the ratio of the first area to the second area is maintained, the whole second content may increase or decrease according to the user input in the first area 310. Alternatively, a part of the second content may be cropped and displayed regardless of the ratio.

According to an embodimentof the present disclosure, the GPU 180 may set maximum and minimum areas of the second area 320 such that the greatest element of elements (e.g., an image, a list item, and the like) of the first content is displayed on the first area 320. For example, the GPU 180 may designate maximum and minimum sizes of the second area 320 displayed at a starting part and an end part of the first content such that the greatest element of the first content is displayed on the first area.

According to various embodimentsof the present disclosure, new content may be added to the first content, and content display area of the first area may be changed. Accordingly, the display range of the second content through the second area, the size of the second area, or the size of the second content may be changed. For example, in the case where a user works out, one or more of a biometric sensor, a motion sensor, a location sensor, and an environment sensor may collect information about the motion of a user and a movement distance. The GPU 180 may calculate and display workout information (e.g., one or more of a heart rate, a workout time, a workout path, a movement distance, and a quantity of motion) as the first content. In the case where the record of the workout information being the first content is added, the amount of the first content may increase, and the display area of the first content displayed on the first area may be changed. The size of the second area, the display range of the displayed second content, or the size of at least a part of the second content may be changed according to the change of the display area of the first content.

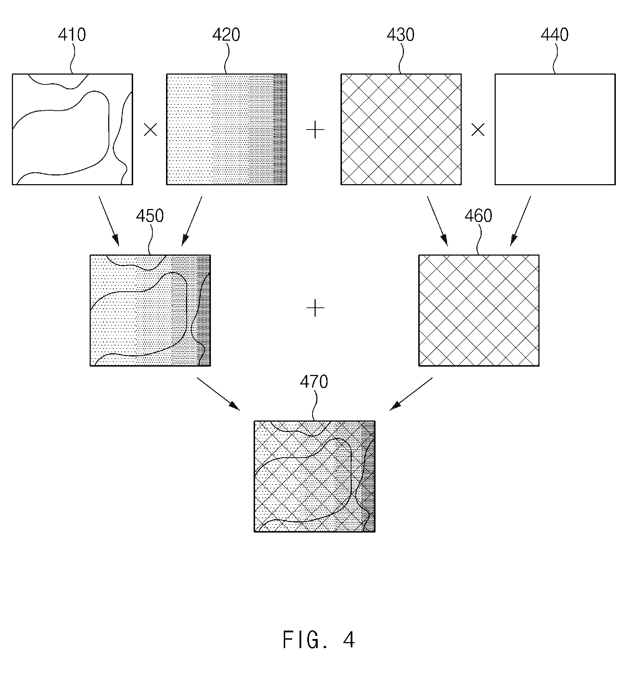

FIG. 4 is a view illustrating a composition and a masking procedure according to various embodimentsof the present disclosure.

Referring to FIG. 4, the GPU 180 may change a source image 410 based on the input of a user in a first area. For example, to apply a gradation effect to the source image 410, the GPU 180 may select the source image 410 and may select transparency information (e.g., a gradation image 420 to which transparency information is mapped). The GPU 180 may perform a composition operation with respect to the source image 410 and the gradation image 420, obtaining a first operation image 450.

According to various embodimentsof the present disclosure, to provide a masking effect to a destination image 430, the GPU 180 may perform a composition operation or a masking operation with respect to chroma-key information (e.g., an image 440 in FIG. 4) and the destination image 430, obtaining a second operation image 460. For example, in the second operation image 460, a lozenge part may be processed to be opaque, and a black part between lozenge parts may be processed to be transparent.

According to various embodimentsof the present disclosure, an image 470 illustrates a result obtained by combining the first operation image 450 (i.e., an image obtained by processing the source image 410), to which a gradation effect is added, and the second operation image 460 (i.e., an image obtained by processing the destination image 430), to which a masking information is added.

In FIG. 4, a masking method is illustrated. However, embodiments disclosed herein may not be limited thereto.The method of outputting a second area may be changed based on a variety of image processing methods.

For blending, geometric processing, or processing by a physical attribute, one or more of the following methods 1) to 5) may be applied to the second area, and an attribute (e.g., a method to be applied thereto and effect strength) may be provided for each method.
1) Image filtering: a method of transforming a color or a transparency for each pixel with respect to a view area of a screen to which a filter is applied. To apply a blurring effect, the image filtering may use a low-pass spatial filter or may use an average filter or a weighted average filter.
   For example, the GPU 180 may use a Gaussian smoothing filter method being one of weighted average filters. According to an embodiment, to adjust blur information (e.g., a blurring level), the GPU 180 may differently apply the size of a mask to be used at a convolution filter. For example, if increasing the blurring level, the GPU 180 may set the size of a mask to be relatively large. If decreasing the blurring level, the GPU 180 may set the size of a mask to be relatively small.
   For another example, to apply a sharpening effect thereto, the GPU 180 may maintain a part such as the boundary part of an image in which a sudden change occurs on the image by removing the low frequency part of an image based on a highpass filter and a high-boost filter.
   For another example, a noise filter may be used to reduce a noise or to add a noise thereto. In the case of a noise reduction, the GPU 180 may perform an operation based on a median filter when an impulse noise or a salt-and-pepper noise is removed. To remove a Gaussian noise, the GPU 180 may use a low-pass filter. To remove a Gaussian noise and a uniform noise, the GPU 180 may use a midpoint filter.
   In contrast, the GPU 180 may add a noise to a source image. According to an embodiment, the GPU 180 may generate a noise (e.g., a salt-and-pepper noise) with respect to image pixels based on a ratio or a probability. According to an embodiment, to add a noise to a source image, the GPU 180 may mix a background grain image and the source image, generating a composition image.
   For another example, the GPU 180 may adjust the ratio or the level of color components (e.g., red, green, and blue of RGB color model) with respect to a source image based on a colorizing operation, providing a specific effect to the source image. The GPU 180 may adjust the ratio or the level of the alpha component of RGBA (e.g., red, green, blue, and alpha) with respect to the source image based on the adjusting of a transparency. Accordingly, the GPU 180 may apply a translucent or fog effect to a source image or may adjust brightness, saturation, and the like.
2) Composition: the GPU 180 may perform a composition operation with respect to a plurality of images in an area, to which a filter is applied according to an input (e.g., a scroll movement value by a flick or a dragging) through a UI, in units of pixels, generating a composition image as a result. For example, the GPU 180 may perform an image processing of add, subtract, multiply, AND, OR, XOR, screening, and the like with respect to two or more images.
3) Masking operation: the GPU 180 may use one or more of an erosion operation, a dilation operation, an opening operation, and a closing operation based on a morphology method. The GPU 180 may perform edge detection. According to various embodiments, the GPU 180 may process an area such that the area is only displayed or does not appear based on a chroma-key method. For example, the GPU 180 may differently apply, to the area, the ratio of the vertical to the horizontal length of an area to be applied according to the scroll movement value of a user or may perform different masking operations with respect to the area for each area, providing various image processing effects. The masking operation may be used as a method for an image filtering or a composition.
4) Geometric processing: The GPU 180 may change the array of each pixel based on an input (e.g., a scroll movement value by a flick or dragging) througha UI. For example, the GPU 180 may use one or more of a scaling, a rotation, and a shift. According to an embodiment, the GPU 180 may change the shape in an image. In this time, the GPU 180 may use a morphing method or a warping method.
5) Image processing method by a physical engine: when an object is provided to the screen of the electronic device 101, the physical engine unit 185 may calculate a physical computation based on a movement path of an object. In the case, a physical quantity to be operated may include at least one or more of gravity, speed, acceleration, friction force, gravitational pull, elastic force, and the like.

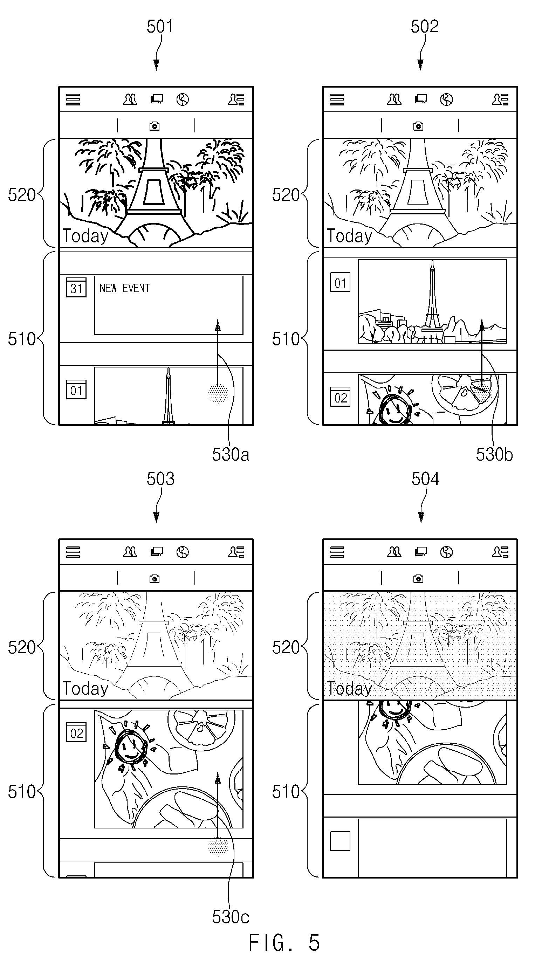

FIG. 5 is a view illustrating a screen outputting method by a blurring according to various embodimentsof the present disclosure.

Referring to FIG. 5, screens 501 to 504 may be divided into a plurality of areas.The screens 501 to 504 may output different contents from one another. Each of the screens 501 to 504 may be a screen by an application that is independent of one another, and the screens 501 to 504 may be different contents outputted from one application. Unlike an embodiment of FIG. 3, the size of a second area 520 may be fixed in FIG. 5.

In the screens 501 to 504, it is illustrated that a first area 510 is arranged in the lower portion of the second area 520 in the case where the swipe input from bottom to top of a user is generated in the first area 510. However, embodiments disclosed herein may not be limited thereto.

In the screen 501, a user may generate a first input 530a in the first area 510. The GPU 180 may verify an attribute (e.g., an input direction - screen from bottom to top direction, an input speed- normal of slow/normal/fast, input length - a distance from a starting point to an end point of a swipe input, or the like) of the first input 530a.

In the screen 502, the first content (e.g., an internet news, the screen of Facebook, or the like) displayed on the first area 510 may be shifted toward the bottom based on the first input 530a. The second area 520 may gradually blur according to the first input 530a. A variety of image processing methods may be applied to a blur method. The masking method illustrated in FIG. 4 may be used to the blur method. Moreover, the blur method may be a method in which a resolution lowers, and a method in which a filter masks an image, or the like may be applied to the blur method. For example, in the case where the resolution of the second area 520 lowers, throughput that the GPU 180 or the processor 120 processes may decrease, and thus a processing speed may increase. According to various embodiments, on the basis of an image processing (e.g., a filtering) about the whole second area 520, the resolution may lower or the screen may blur.

The GPU 180 may allow an area (e.g., the first area 510), to which a user provides an input and which the user currently confirms, to be maintained to a clear screen state. Moreover, the GPU 180 may allow an area (e.g., the second area 520), to which a user is currently indifferent, to gradually blur. A user may naturally focus on the area in which a user has an interest.

In the screens 502 and 503, in the case where a user inputs a second input 530b, the GPU 180 may allow the second area of the screen 503 to be darker and more blurred than the second area 520 of the screen 502 based on an attribute of the second input 530b.

In the screens 503 and 504, in the case where a user inputs a third input 530c, the GPU 180 may allow the second area 520 of the screen 504 to be darker and more blurred than the second area 520 of the screen 503 based on an attribute of the third input 530c. In this case, the second area 520 may be changed to a minimum brightness state (e.g., brightness or saturation value set to a default value). Even though a user additionally swipes the first area 510, the second area 520 may be maintained to a minimum brightness state. In the case where a user additionally touches the second area 520, the second area 520 may be changed into a designated brightness.

According to various embodimentsof the present disclosure, in the case where a user cancels a swipe operation or generates a swipe operation in the inverse direction (i.e., from top to bottom), the second area 520 may return to an existing brightness state.

According to various embodimentsof the present disclosure, the GPU 180 may apply a conversion effect to a source image of the second area 520 based on the attribute (e.g., a representative color, representative transparency, or metadata) of the first content displayed on the first area 510. For example, if the attribute of a part of the first content displayed on the first area 510 is a blue color (e.g., sea), the GPU 180 may change the color of the second area 520 into the color of the blue series. Moreover, whenever the item or the part of content displayed on the first area is changed according to an input of a user, the GPU 180 may apply a conversion effect to the second area 520. On the basis of a method of determining the attribute of the first content, the GPU 180 may analyze the keyword of metadata, may evaluate the color of a part of an image of the first area 510 (e.g., based on RGB value of each pixel), or may use one or more of methods of analyzing text information of the first area 510, and the like. For example, in the case where content displayed on the first area 510 is a sea landscape in which a blue color is relatively great, content displayed on the second area 520 may receive a colorizing effect of the blue series.

According to an embodimentof the present disclosure, the GPU 180 may apply a conversion effect to a source image of the second area 520 based on the attribute (e.g., a representative color, a representative transparency, or metadata) of a part of the first content corresponding to the second area 520 (e.g., a part of the first content virtually overlapped with the second area 520). For example, in the case where a GUI associated with a calendar of which the main color is a green color is displayed on the first area 510, the GPU 180 may not apply an image conversion effect to the second area 520 if there is not a part of the first area510 with which the second area 520 is overlapped or to which the second area 520 is adjacent. In the case where the GUI of a calendar of a green color enters the second area 520 based on a swipe operation of a user, the image color of the whole second area 520 may be changed into a green color. In the case where a thumbnail image of the blue series enters the second area 520 based on additional swipe operation of a user, the image color of the whole second area 520 may be changed into a blue color.

According to various embodimentsof the present disclosure, the GPU 180 may provide a blending effect to the second area 520 by a user input. For example, if an area displayed on the first area 510 is the starting point of the first content, the GPU 180 may display the second content on the second area 520 without an image conversion. If content area displayed on the first area 510 is changed according to a user input, the GPU 180 may apply a blending effect to the second area 520.

The strength of the blending effect may be changed according to degree varied according to a user input. For example, in the case where the first area 510 is displayed on a list top area, the strength of a blending effect may be in a minimum state (e.g., the degree of a blur effect is 0 %) in the second area 520. Moreover, in the case where the first area 510 is displayed on a list bottom area (not shown), the strength of a blending effect may be in a maximum state (e.g., the degree of a blur effect is 100%). Accordingly, the strength of a blending effect may be changed according to a user input. In a method of adjusting the strength of an effect, a movement distance by a user input, the ratio of a distance movement to a current display location to the whole distance, the ratio (i.e., the applying of an effect according to the adjustment of a zoom) of a display area of the first area 510 to an area corresponding to the whole content, and the like may be used.

The GPU 180 may control a blending effect based on biometric information. For example, there may be quantity of a workout target (e.g., the consumption of calorie, the number of steps, a movement distance, or the like) that a user sets. The first area 510 may display the quantity of a corresponding workout target and the quantity of motion that the user achieves. In the case, the quantity of motion may be measured based on sensors such as an acceleration sensor, a heartbeat sensor, a motion sensor, a GPS, and the like. The achievement ratio (e.g., 0 to 100%) of the measured quantity of motion to the quantity of a workout target may be determined. The GPU 180 may apply a blending effect to the second area 520 based on the achievement ratio. For example, if the achievement ratio about the quantity of motion is 0%, the transparency of a source image may be provided as 0% (e.g., a fog effect 100%), and thus the source image may be overlapped with a white color. If the achievement ratio about the quantity of motion is close to or exceeds 100%, the transparency of a source image may be provided as 100%, and thus a fog effect is removed. As a result, the source image may clearly appear.

The GPU 180 may apply, to a source image, one or more of the generation or removal effect of a noise, a blur effect, a transparency, a sharpness, brightness, saturation, and a contrast as a blending effect. According to an embodiment, there may be a colorization effect. For example, the GPU 180 may initially set the strength of a colorization effect to a color value (e.g., a color component) of a pixel of a source image, may apply different color filters to the source imagebased on a scroll direction or a shift direction of a user input, and may increase the strength of a colonization effect by adjusting one of saturation or brightness by a user input.

According to an embodimentof the present disclosure, various effects may occur based on a plurality of image conversion attributes. For example, a blurred grainy image to which a blur effect is applied may be generated. According to an embodiment, a film scratch effect, a sepia effect, a rain effect, and the like may be provided.

According to various embodimentsof the present disclosure, a part, which corresponds to the second area 520, from among the source image of the second area 520 and content displayed on the first area 510 may be displayed through a composition operation, and thus the GPU 180 may provide a blending effect to the part.

For example, when an area displayed on the first area 510 is scrolled according to a user input and is overlapped with the second area 520, a source image displayed on the second area 520 and a corresponding part of the first content arranged on the second area 520 by a user input may be transformed based on a composition operation and the transformed result may be displayed on the second area 520 Accordingly, on the basis of a user input, information about a part of the first content arranged on the second area 520 and the second content may be combined and the combined result may be displayed to a user. Accordingly, the result of the user input may be displayed or predicted.

According to an embodimentof the present disclosure, a result obtained by performing the composition operation may appear while a user input occurs. Accordingly, while a user input occurs, an image conversion effect based on a part of the first content that newly enters the second area 520 may be verified. If there is not a user input, a source image may be only displayed on the second area 520, and thus this may be denoted that a user input does not exist. According to an embodiment, if the time of an operation (e.g., a touch and hold and a hovering input in a fixed area) in which an input state is not changed exceeds a time (e.g., one second) even though an input through a UI exists, a composition effect may be canceled.

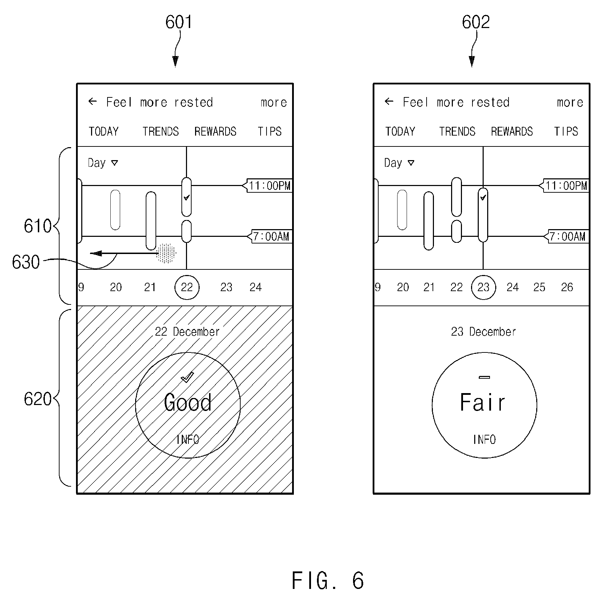

FIG. 6 is a view illustrating a screen outputting method according to an addition of information, according to various embodimentsof the present disclosure. FIG. 6 illustrates that the first area in which a user input occurs is arranged on the top portion of the second area. However, embodiments disclosed herein may not be limited thereto.FIG. 6 illustrates a GUI for evaluating and displaying a sleep record.

Referring to FIG. 6, a first area 610 and a second area 620 may output different contents. The first and second areas 610 and 620 may output different contents displayed by the same application (e.g., a sleep record evaluation application), respectively.

According to various embodimentsof the present disclosure, if the content display area of the first area 610 is changed by revising first content, the GPU 180 may change and display the image of the second area 620. For example, in the case where a user works out, the GPU 180 may collect data about the motion and a movement distance of a user based on one or more of a biometric sensor, a motion sensor, a location sensor, and an environment sensor and may calculate and display workout information (e.g., one or more of a heart rate, a workout time, a workout path, a movement distance, and a quantity of motion) as the first content. In the case where the record of the workout information is added as the first content, the amount of the first content may increase, and the display area of the first content displayed on the first area 610 may be changed. The size of the second area 620, the display area range of the displayed second content, or the size of at least a part of the second content may be changed according to the change of a display area of the first content.

Sleep time information such as a sleep start and end time, a sleep target time, or the like may be measured based on a biometric sensor (e.g., a motion sensor, a microphone, an EMG, a GSR, and the like) or may be inputted according to a user input 630. The qualitative evaluation (e.g., bad, fair, and good) of a sleep may be performed according to the sleep time information.

In a screen 601, the first area 610 may mean that a user starts to sleep on December 22 at 11 o'clock p.m. and has an arousal state once in the middle and that at 7 a.m., the sleep of the user is ended. A second area 620 may mean that the quality and quantity of the sleep of a user is evaluated as a 'good' state. The first area 610 may focus on the sleep information on December 22, and the second area 620 may be set to a first color (e.g., a green color) corresponding to 'good' based on the sleep information.

In a screen 602, sleep information on December 23may be added to the first content, and the focused state may be displayed in the first area 610. The first area 610 may mean that a user starts to sleep at 11:10 p.m. and that at 7:10 a.m., the sleep of the user is ended. The second area 620 may mean that the quality and quantity of the sleep of a user is evaluated as a 'fair' state. The second area 620 may be set to the second color (e.g., a beige color) corresponding to "fair" being the qualitative evaluation result of a sleep on December 23 focused on the first area 610. With regard to a focused part of the newly added first content, the GPU 180 may determine a conversion effect of the second area 620 based on the evaluation result of a sleep state. Moreover, in the case where the previous date is focused on the first area 610 by a user input, the GPU 180 may provide the second area 620 with a colonizing effect corresponding to the evaluation result of a sleep state that corresponds to the previous date.

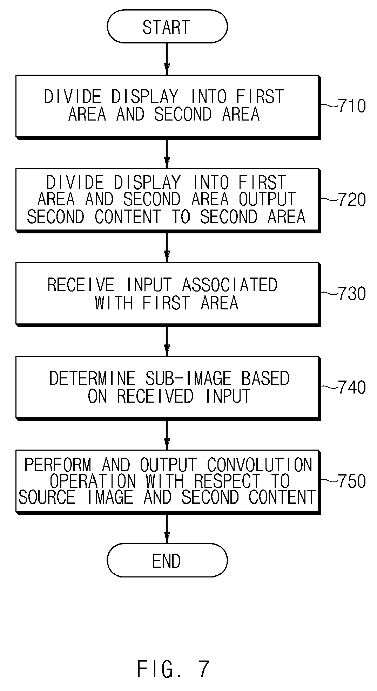

FIG. 7 is a flow chart illustrating an image composition method according to various embodimentsof the present disclosure.

Referring to FIG. 7, in operation 710, the GPU 180 may divide the display 160 of the electronic device 101 into a plurality of areas of which the number is designated. The areas thus divided may be configured to output different contents or to output contents associated with each other. Below, it is described that the GPU 180 divides the display 160 into two areas (e.g., a first area and a second area). However, embodiments disclosed herein may not be limited thereto.

In operation 720, the GPU 180 may output the first content to the first area and may output the second content to the second area. According to various embodiments, the first content and the second content may be different from each other.

In operation 730, the GPU 180 may receive an input associated with the first area. The input may include an input (e.g., a swipe operation, a touch operation, or the like) by a user or an input through the sensor module 155 included in the electronic device 101.

In operation 740, the GPU 180 may determine a sub-image based on the received input. The first area may be scrolled according to a user input, and thus an image displayed on the first area may be overlapped with the second area. The GPU 180 may determine the overlapped image as a sub-image.

In operation 750, the GPU 180 may perform a convolution operation with respect to a source image based on the second content displayed on the second area and the sub-image arranged on the second area by a user input and may output the performed result.

According to various embodimentsof the present disclosure, a screen outputting method performed at an electronic device may include dividing a display of the electronic device into a first area and a second area, outputting first content to the first area and outputting second content to the second area, receiving an input associated with the first area, and changing a method of outputting the second content based on an attribute of the input.

According to various embodimentsof the present disclosure, the receiving of the input may include receiving an input by a user or an input about a state of the electronic device or surroundings of a user recognized through a sensor module. The changing of the method of outputting the second content may include stepwise changing the method of outputting the second content based on a change of the input.

According to various embodimentsof the present disclosure, the changing of the method of outputting the second content may include changing a size of the second area based on a change of the input. The changing of the size may include shifting a boundary line between the first area and the second area and changing the size of the second area.

According to various embodimentsof the present disclosure, the changing of the method of outputting the second content may include performing an image processing with respect to the second content and outputting the processed second content. The performing of the image processing may include performing at least one of a blending effect, a composition effect, a masking effect, or a geometric processing effect. The blending effect may include at least one of a generation or removal effect of a noise, a flow effect, a transparency, a sharpness, brightness, saturation, a contrast, or a colorization effect. The performing of the image processing may include changing at least one of brightness or saturation by applying different color filters to the second content based on the input. The performing of the image processing may include performing a composition operation with respect to a source imageof the second area and an image of a part, which corresponds to the second area, of the first content or masking the image.

According to various embodimentsof the present disclosure, the screen outputting method may further include changing a state of the second content into a state before the input is generated if the input is canceled. The changing of the state may include stepwise changing the second content based on a degree in which the input is canceled.

According to various embodimentsof the present disclosure, the first and second contents may be contents outputted according to operations of different applications. The first and second areas may be arranged in oneof an overlap manner and a single plane manner. The dividing of the display may include dividing a whole of an areaof the display into the first area and the second area.

According to various embodimentsof the present disclosure, the changing of the method of outputting the second content may include changing a method of outputting the first content based on the input and changing at least one attribute about the method of outputting the second content based on the method of outputting the first content.

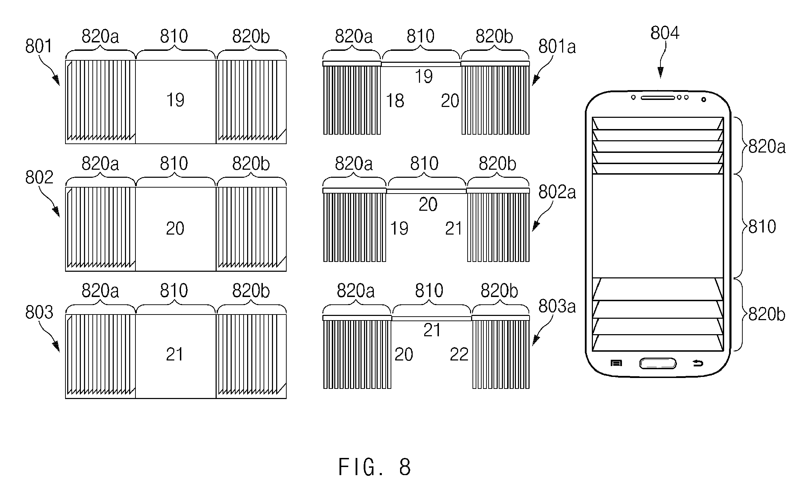

FIG. 8 is a diagram illustrating a card-type UI according to various embodimentsof the present disclosure.

Referring to FIG. 8, the card-type UI may be used in the web page of a browser, a news tile, and a dashboard-type GUI. FIG. 8 is a view in the case where the nineteenth, the twentieth, and the 21st card items are selected and displayed according to a user input in a landscape display mode. The displayed items may be displayed on a first area 810, and the remaining items may be displayed on one or more of second area 820a or 820b to have a shape in which a part is overlapped with each other or to have a standing (e.g., vertical or diagonal) shape.

In a screen 801, the first area 810 may display the nineteenth item, and the left second area 820a and the right second area 820b may display items that are placed at the left or right sides of the nineteenth item. According to an embodiment, the left second area 820a and the right second area 820b may include items (e.g., the eighteenth and the twentieth items) of which parts are displayed and may further include other items (e.g., the first to seventeenth items and 21st to 40th items) of an overlapped or standing shape.

In a screen 802, the first area 810 may display the twentieth item and may be changed to the nineteenth item (i.e., the screen 801) or the 21st item (i.e., a screen 803) by a horizontal swipe operation of a user.

In the screen 802, if a user input (e.g., a touch or a hovering) occurs in the left second area 820a, the nineteenth item being the previous item may be displayed, and if a user input occurs in the right second area 820b, the 21st item being the next item may be displayed. The GPU 180 may change a speed for changing an item displayed according to a location where a user input occurs in the second area. In the left second area 820a, if the user input is maintained at a relatively left location (e.g., a touch hold or a hovering hold during over a fixed time), the GPU 180 may change the displayed item at a relatively fast speed, and if the user input is maintained at a relatively right location, the GPU 180 may change the displayed item at a relatively slow speed.

According to an embodimentof the present disclosure, on the basis of an item displayed on the first area 810, the location of the first area 810 may be changed, and the locations of the second areas 820a and 820b may be changed. For example, in the case where the first item or the last item is displayed on the first area 810, one of the second areas 820a and 820b may be only displayed. In the case where the first item is displayed on the first area 810, the second area 820b may be only display on the right side of the first area 810. In the case where the last item is displayed on the first area 810, the second area 820a may be only display on the left side of the first area 810.

In the screens 801 to 803, the second areas 820a and 820b may display slightly inclined standing items and the first area 810 may display an item of a horizontal state.

The screens 801a to 803a may be conceptual side views of the screen 801 to 803, respectively. Items displayed on the left second area 820a and the right second area 820b may vertically stand, and an item displayed on the first area 810 may be horizontally arranged. Standing angles of items arranged on the second areas 820a and 820b need not necessarily be perpendicular, the angles may be changed according to an input through a UI or an event by an acceleration sensor, a gyro sensor, or the like.

Images displayed on the second areas 820a and 820b may be associated with items of standing or overlapped states.

According to an embodimentof the present disclosure, the second content displayed on the second areas 820a and 820b may be a separate image that indicates the top portions of a vertically standing items. The second content,in which the top portions of separate standing items are displayed, as well as the first content displayed in the horizontal state may be displayed on the second areas 820a and 820b.

According to an embodimentof the present disclosure, the second content may be a separate image that is overlaid or overwritten on the standing items included in the second areas 820a and 820b. For example, an image corresponding to the second content may be combined with images corresponding to the upper surfaces of standing items included in the second areas 820a and 820b, and a blending effect may be applied to the image.

According to various embodimentsof the present disclosure, the method of outputting the first area 810 and the second areas 820a and 820b may be applied in the case where an electronic device is in a portrait mode. In a screen 804, the first area 810 may be arranged on the center of a screen, and the second areas 820a and 820b may be arranged on the top portion and the bottom portion of the first area 810, respectively.

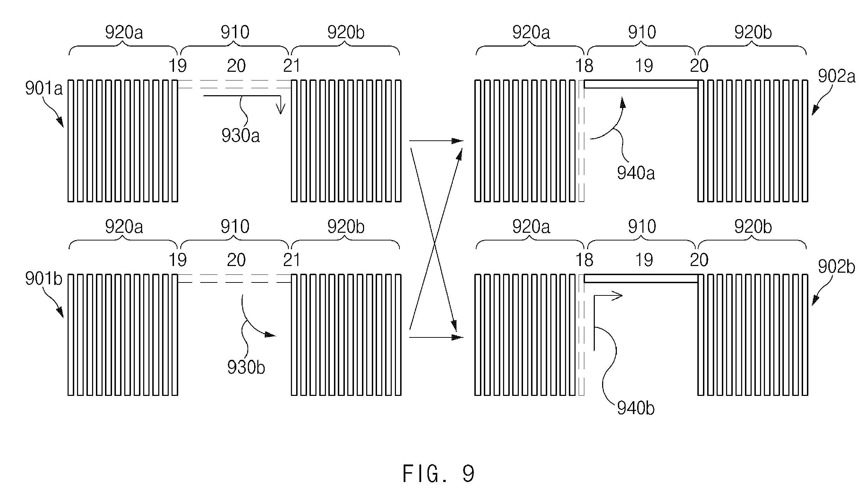

FIG. 9 is a view illustrating a screen switch according to various embodimentsof the present disclosure.

Referring to FIG. 9, items that a user confirms may be displayed on a first area 910, and the remaining items may be displayed on one or more of second areas 920a and 920b to have a shape in which a part is overlapped with each other or to have a standing (e.g., vertical or diagonal) shape.

In screens 901a and 901b, the first area 910 may display the twentieth item and may be changed to the nineteenth item by a swipe operation from left to right of a user. For example, if a user input (e.g., a touch or a hovering) occurs in the left second area 920a, the nineteenth item being the previous item may be displayed.

In the screens 902a and 902b, after the twentieth item is folded to the right (operation 930a) or is closed (operation 930b), the nineteenth item may be opened (operation 940a) or may be spread (operation 940b). The nineteenth item may be displayed according to the procedure. In the second areas 920a or 920b, images in which items are vertically arranged may be the reverse images or the backs of items or may be views of a normal image at which a user aslant looks.

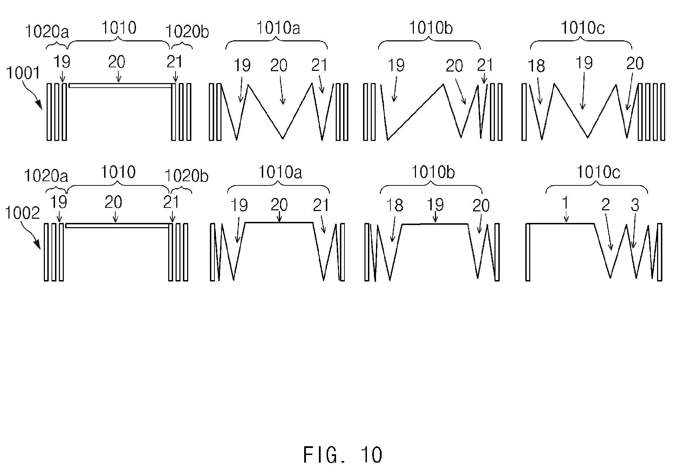

FIG. 10 is a view illustrating a screen switch of a folding type according to various embodimentsof the present disclosure.

Referring to FIG. 10, a screen 1001 may mean a method of spreading a screen if the nineteenth item is placed in a first area 1010, 1010a, 1010b and 1010c after the twentieth item that is currently displayed according to an input of a user is folded in half and pulled to the right of a second area 1020a.

A screen 1002 may mean a method of fully viewing the nineteenth item after the twentieth item that is currently displayed in a first area 1010, 1010a, 1010b and 1010c is folded in half and the nineteenth item that was folded in half is displayed to be spreadat the same time, by an input of a user.

In the screen 1002, in the case where an item to be displayed is not any more through a successive scroll operation, the leftmost image may illustrate that the last item that was folded in half is displayed to be spread and the remaining items is displayed as the folded shape to notify a user that the last item is displayed on a current screen. The GPU 180 may explicitly provide information to a user by using a graphic effect based on a result transformed according to a physical engine such as pulling a paper, a fabric, or a rubber. A paper simulation technology, a cloth simulation technology, a fabric simulation technology, and a spring simulation technology may be applied thereto.

If the event of a scroll or a flip operation such as pulling or pushing is generated to look at an item while the last item is displayed, an elastic effect, a torn paper effect, a cloth fluttering effect, and the like may be applied to a screen. The GPU 180 may apply an effect by a physical engine to the second area1020a or 1020b and may display items, based on the items included in the second area 1020a or 1020b.

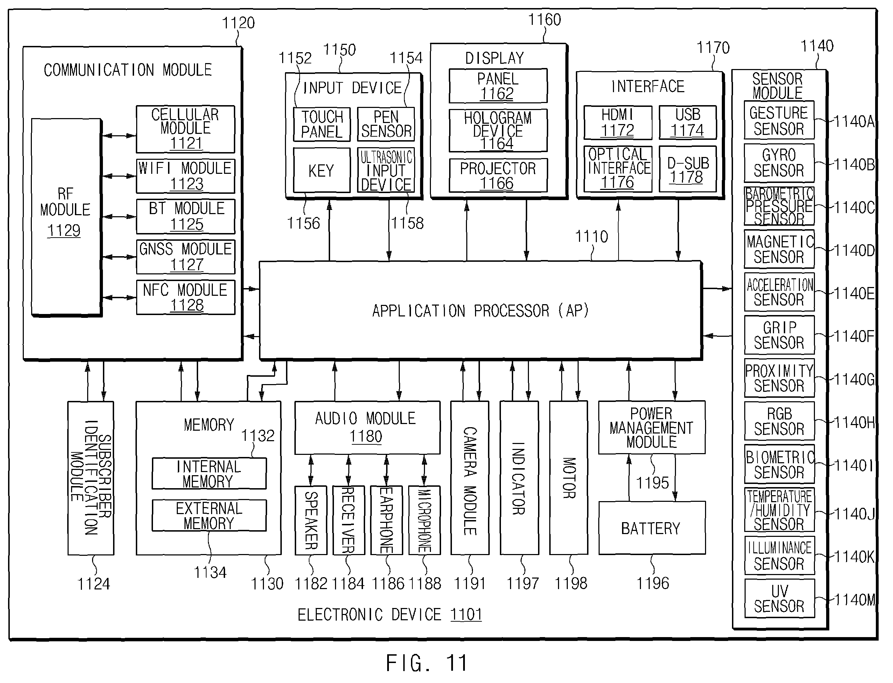

FIG. 11 is a block diagram illustrating an electronic device according to various embodimentsof the present disclosure.

Referring to FIG. 11, an electronic device 1101 may include, for example, all or a part of an electronic device 101 illustrated in FIG. 1. The electronic device 1101 may include one or more processors (e.g., an application processor) 1110, a communication module 1120, a subscriber identification module (SIM) 1124, a memory 1130, a sensor module 1140, an input device 1150, a display 1160, an interface 1170, an audio module 1180, a camera module 1191, a power management module 1195, a battery 1196, an indicator 1197, and a motor 1198.

The processor 1110 may drive an OS or an application to control a plurality of hardware or software components connected to the processor 1110 and may process and compute a variety of data. The processor 1110 may be implemented with a system on chip (SoC), for example. According to an embodiment, the processor 1110 may further include a GPU and/or an image signal processor. The processor 1110 may include at least a part (e.g., a cellular module 1121) of components illustrated in FIG. 11. The processor 1110 may load and process an instruction or data, which is received from at least one of other components (e.g., a nonvolatile memory), and may store a variety of data at a nonvolatile memory.

The communication module 1120 may be configured the same as or similar to a communication interface 170 of FIG. 1. The communication module 1120 may include a cellular module 1121, a Wi-Fi module 1123, a Bluetooth module 1125, a GNSS module 1127 (e.g., a GPS module, a GLONASS module, a BeiDou module, or a Galileo module), an NFC module 1128, and a radio frequency (RF) module 1129.

The cellular module 1121 may provide voice communication, video communication, a character service, an Internet service, or the like through a communication network. According to an embodimentof the present disclosure, the cellular module 1121 may perform discrimination and authentication of the electronic device 1101 within a communication network using the SIM 1124 (e.g., a SIM card), for example. According to an embodimentof the present disclosure, the cellular module 1121 may perform at least a portion of functions that the processor 1110 provides. According to an embodiment of the present disclosure, the cellular module 1121 may include a CP.

Each of the Wi-Fi module 1123, the Bluetooth module 1125, the GNSS module 1127, and the NFC module 1128 may include a processor for processing data exchanged through a corresponding module, for example. According to an embodiment, at least a portion (e.g., two or more components) of the cellular module 1121, the Wi-Fi module 1123, the Bluetooth module 1125, the GNSS module 1127, and the NFC module 1128 may be included within one integrated circuit (IC) or an IC package.

The RF module 1129 may transmit and receive a communication signal (e.g., an RF signal). The RF module 1129 may include a transceiver, a power amplifier module (PAM), a frequency filter, a low noise amplifier (LNA), an antenna, or the like. According to an embodiment, at least one of the cellular module 1121, the Wi-Fi module 1123, the BT module 1125, the GNSS module 1127, or the NFC module 1128 may transmit and receive an RF signal through a separate RF module.

The SIM 1124 may include, for example, a SIM and may include unique identify information (e.g., IC card identifier (ICCID)) or subscriber information (e.g., integrated mobile subscriber identity (IMSI)).

The memory 1130 (e.g., the memory 130) may include an internal memory 1132 or an external memory 1134. For example, the internal memory 1132 may include at least one of a volatile memory (e.g., a dynamic random access memory (DRAM), a static RAM (SRAM), or a synchronous DRAM (SDRAM)), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a NAND flash memory, or a NOR flash memory), a hard drive, or a solid state drive (SSD).

The external memory 1134 may include a flash drive, for example, compact flash (CF), secure digital (SD), micro-SD, mini-SD, extreme digital (xD), multimedia card (MMC), a memory stick, or the like. The external memory 1134 may be functionally and/or physically connected to the electronic device 1101 through various interfaces.

The sensor module 1140 may measure, for example, a physical quantity or may detect an operation state of the electronic device 1101. The sensor module 1140 may convert the measured or detected information to an electric signal. The sensor module 1140 may include at least one of a gesture sensor 1140A, a gyro sensor 1140B, a barometric sensor 1140C, a magnetic sensor 1140D, an acceleration sensor 1140E, a grip sensor 1140F, a proximity sensor 1140G, a color sensor 1140H (e.g., RGB sensor), a biometric sensor 1140I, a temperature/humidity sensor 1140J, an illuminance sensor 1140K, or an UV sensor 1140M. Even though not illustrated, additionally or alternatively, the sensor module 1140 may include, for example, an E-nose sensor, an EMG sensor, an EEG sensor, an ECG sensor, a PPG sensor, an IR sensor, an iris sensor, and/or a fingerprint sensor. The sensor module 1140 may further include a control circuit for controlling at least one or more sensors included therein. According to an embodiment, the electronic device 1101 may further include a processor which is a part of the processor 1110 or independent of the processor 1110 and is configured to control the sensor module 1140. The processor may control the sensor module 1140 while the processor 1110 remains at a sleep state.

The input device 1150 may include, for example, a touch panel 1152, a (digital) pen sensor 1154, a key 1156, or an ultrasonic input unit 1158. The touch panel 1152 may use at least one of capacitive, resistive, IR, or ultrasonic detecting methods. Also, the touch panel 1152 may further include a control circuit. The touch panel 1152 may further include a tactile layer to provide a tactile reaction to a user.

The (digital) pen sensor 1154 may be, for example, a part of a touch panel or may include an additional sheet for recognition. The key 1156 may include, for example, a physical button, an optical key, a keypad, and the like. The ultrasonic input device 1158 may detect (or sense) an ultrasonic signal, which is generated from an input device, through a microphone (e.g., a microphone 1188) and may make sure of data corresponding to the detected ultrasonic signal.

The display 1160 (e.g., the display 160 illustrated in FIG. 1) may include a panel 1162, a hologram device 1164, or a projector 1166. The panel 1162 may be configured the same as or similar to a display 160 of FIG. 1. The panel 1162 may be implemented to be flexible, transparent or wearable, for example. The panel 1162 and the touch panel 1152 may be integrated into a single module. The hologram device 1164 may display a stereoscopic image in a space using a light interference phenomenon. The projector 1166 may project light onto a screen so as to display an image. The screen may be arranged in the inside or the outside of the electronic device 1101. According to an embodiment, the display 1160 may further include a control circuit for controlling the panel 1162, the hologram device 1164, or the projector 1166.

The interface 1170 may include, for example, an HDMI 1172, a USB 1174, an optical interface 1176, or a D-subminiature (D-sub) 1178. The interface 1170 may be included, for example, in the communication interface 170 illustrated in FIG. 1. Additionally or alternatively, the interface 1170 may include, for example, a mobile high definition link (MHL) interface, an SD card/MMC interface, or an infrared data association (IrDA) standard interface.

The audio module 1180 may convert a sound and an electric signal in dual directions. At least a part of the audio module 1180 may be included, for example, in an I/O interface 150 illustrated in FIG. 1. The audio module 1180 may process, for example, sound information that is inputted or outputted through a speaker 1182, a receiver 1184, an earphone 1186, or a microphone 1188.

The camera module 1191 for shooting a still image or a video may include, for example, at least one image sensor (e.g., a front sensor or a rear sensor), a lens, an image signal processor (ISP), or a flash (e.g., an LED or a xenon lamp).

The power management module 1195 may manage, for example, power of the electronic device 1101. According to an embodiment, a power management IC (PMIC), a charger IC, or a battery or fuel gauge may be included in the power management module 1195. The PMIC may have a wired charging method and/or a wireless charging method. The wireless charging method may include, for example, a magnetic resonance method, a magnetic induction method or an electromagnetic method and may further include an additional circuit, for example, a coil loop, a resonant circuit, or a rectifier, and the like. The battery gauge may measure, for example, a remaining capacity of the battery 1196 and a voltage, current or temperature thereof while the battery is charged. The battery 1196 may include, for example, a rechargeable battery or a solar battery.

The indicator 1197 may display a specific state of the electronic device 1101 or a part thereof (e.g., a processor 1110), such as a booting state, a message state, a charging state, and the like. The motor 1198 may convert an electrical signal into a mechanical vibration and may generate the following effects: vibration, haptic, and the like. Although not illustrated, a processing device (e.g., a GPU) for supporting a mobile TV may be included in the electronic device 1101. The processing device for supporting a mobile TV may process media data according to the standards of digital multimedia broadcasting (DMB), digital video broadcasting (DVB), MediaFloTM, or the like.

Each of the above-mentioned elements of the electronic device according to various embodiments of the present disclosure may be configured with one or more components, and the names of the elements may be changed according to the type of the electronic device. The electronic device according to various embodiments of the present disclosure may include at least one of the above-mentioned elements, and some elements may be omitted or other additional elements may be added. Furthermore, some of the elements of the electronic device according to various embodiments of the present disclosure may be combined with each other so as to form one entity, so that the functions of the elements may be performed in the same manner as before the combination.

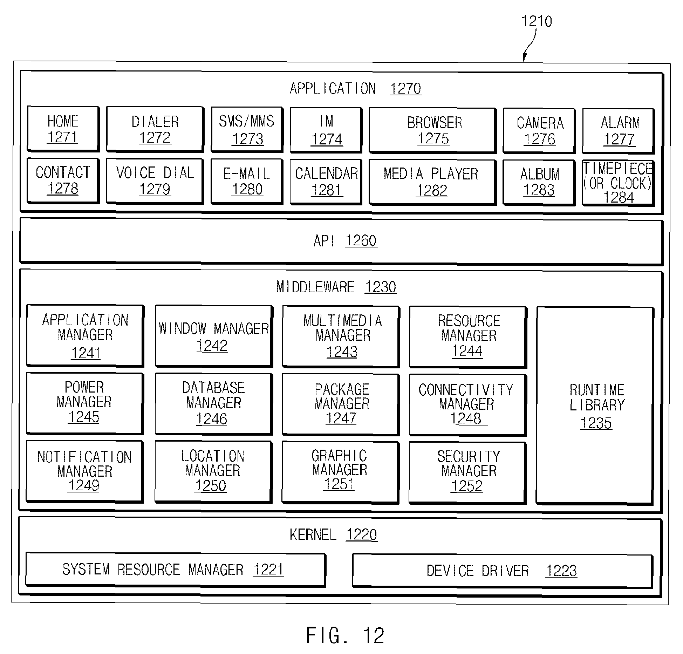

FIG. 12 is a block diagram of a program module according to various embodimentsof the present disclosure.

Referring to FIG. 12, according to an embodiment of the present disclosure, a program module 1210 (e.g., the program 140) may include an OS to control resources associated with an electronic device (e.g., the electronic device 101), and/or diverse applications (e.g., the application program 147) driven on the OS. The OS may be, for example, android, iOS, windows, Symbian,Tizen, or Bada.

The program module 1210 may include a kernel 1220, a middleware 1230, an API 1260, and/or an application 1270. At least a part of the program module 1210 may be preloaded on an electronic device or may be downloadable from an external electronic device (e.g., the first and second electronic devices 102 and 104, the server 106, and the like).

The kernel 1220 (e.g., the kernel 141) may include, for example, a system resource manager 1221 or a device driver 1223. The system resource manager 1221 may perform control, allocation, or retrieval of system resources. According to an embodiment of the present disclosure, the system resource manager 1221 may include a process managing part, a memory managing part, or a file system managing part. The device driver 1223 may include, for example, a display driver, a camera driver, a Bluetooth driver, a common memory driver, an USB driver, a keypad driver, a Wi-Fi driver, an audio driver, or an inter-process communication (IPC) driver.

The middleware 1230 may provide, for example, a function which the application 1270 needs in common, or may provide diverse functions to the application 1270 through the API 1260 to allow the application 1270 to efficiently use limited system resources of the electronic device. According to an embodiment of the present disclosure, the middleware 1230 (e.g., the middleware 143) may include at least one of a runtime library 1235, an application manager 1241, a window manager 1242, a multimedia manager 1243, a resource manager 1244, a power manager 1245, a database manager 1246, a package manager 1247, a connectivity manager 1248, a notification manager 1249, a location manager 1250, a graphic manager 1251, or a security manager 1252.

The runtime library 1235 may include, for example, a library module which is used by a compiler to add a new function through a programming language while the application 1270 is being executed. The runtime library 1235 may perform I/O management, memory management, or capacities about arithmetic functions.

The application manager 1241 may manage, for example, a life cycle of at least one application of the application 1270. The window manager 1242 may manage a GUI resource which is used in a screen. The multimedia manager 1243 may identify a format necessary for playing diverse media files and may perform encoding or decoding of media files by using a codec suitable for the format. The resource manager 1244 may manage resources such as a storage space, memory, or source code of at least one application of the application 1270.

The power manager 1245 may operate, for example, with a basic input/output system (BIOS) to manage a battery or power, and may provide power information for an operation of an electronic device. The database manager 1246 may generate, search for, or modify database which is to be used in at least one application of the application 1270. The package manager 1247 may install or update an application which is distributed in the form of package file.

The connectivity manager 1248 may manage, for example, wireless connection such as Wi-Fi or Bluetooth. The notification manager 1249 may display or notify an event such as arrival message, promise, or proximity notification in a mode that does not disturb a user. The location manager 1250 may manage location information of an electronic device. The graphic manager 1251 may manage a graphic effect that is provided to a user or manage a UI relevant thereto. The security manager 1252 may provide a general security function necessary for system security or user authentication. According to an embodiment of the present disclosure, in the case where an electronic device (e.g., an electronic device 101) includes a telephony function, the middleware 1230 may further includes a telephony manager for managing a voice or video call function of the electronic device.

The middleware 1230 may include a middleware module that combines diverse functions of the above-described components. The middleware 1230 may provide a module specialized to each OS kind to provide differentiated functions. Additionally, the middleware 1230 may remove a part of the preexisting components, dynamically, or may add a new component thereto.

The API 1260 (e.g., the API 145) may be, for example, a set of programming functions and may be provided with a configuration which is variable depending on an OS. For example, in the case where an OS is the android or the iOS, it may be permissible to provide one API set per platform. In the case where an OS is the Tizen, it may be permissible to provide two or more API sets per platform.

The application 1270 (e.g., the application program 147) may include, for example, one or more applications capable of providing functions for a home 1271, a dialer 1272, a short message service (SMS)/multimedia message service (MMS) 1273, an instant message (IM) 1274, a browser 1275, a camera 1276, an alarm 1277, a contact 1278, a voice dial 1279, an e-mail 1280, a calendar 1281, a media player 1282, am album 1283, and a timepiece 1284, or for offering health care (e.g., measuring an exercise quantity or blood sugar) or environment information (e.g., atmospheric pressure, humidity, or temperature).

According to an embodiment, the application 1270 may include an application (hereinafter referred to as "information exchanging application" for descriptive convenience) to support information exchange between the electronic device (e.g., the electronic device 101) and an external electronic device (e.g., the first electronic device 102 or the second electronic device 104). The information exchanging application may include, for example, a notification relay application for transmitting specific information to the external electronic device, or a device management application for managing the external electronic device.

For example, the information exchanging application may include a function of transmitting notification information, which arise from other applications (e.g., applications for SMS/MMS, e-mail, health care, or environmental information), to an external electronic device (e.g., the first electronic device electronic device 102 or the second electronic device 104). Additionally, the information exchanging application may receive, for example, notification information from an external electronic device and provide the notification information to a user.

The device management application may manage (e.g., install, delete, or update), for example, at least one function (e.g., turn-on/turn-off of an external electronic device itself (or a part of components) or adjustment of brightness (or resolution) of a display) of the external electronic device (e.g., the first electronic device electronic device 102 or the second electronic device 104) which communicates with the electronic device, an application running in the external electronic device, or a service (e.g., a call service, a message service, or the like) provided from the external electronic device.

According to an embodiment of the present disclosure, the application 1270 may include an application (e.g., a health care application of a mobile medical device, and the like) which is assigned in accordance with an attribute of the external electronic device (e.g., the first electronic device electronic device 102 or the second electronic device 104). According to an embodiment of the present disclosure, the application 1270 may include an application which is received from an external electronic device (e.g., the server 106,thefirst electronic device electronic device 102 or the second electronic device 104). According to an embodiment of the present disclosure, the application 1270 may include a preloaded application or a third party application which is downloadable from a server. The component titles of the program module 1210 according to the embodiment of the present disclosure may be modifiable depending on kinds of OSs.

According to various embodiments of the present disclosure, at least a part of the program module 1210 may be implemented by software, firmware, hardware, or a combination of two or more thereof. At least a part of the program module 1210 may be implemented (e.g., executed), for example, by a processor (e.g., the processor 120). At least a part of the program module 1210 may include, for example, modules, programs, routines, sets of instructions, or processes, or the like for performing one or more functions.

The term "module" used herein may represent, for example, a unit including one or more combinations of hardware, software and firmware. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific IC (ASIC) chip, a field-programmable gate array (FPGA), and a programmable-logic device for performing some operations, which are known or will be developed.

At least a part of an apparatus (e.g., modules or functions thereof) or a method (e.g., operations) according to various embodiments of the present disclosure may be, for example, implemented by instructions stored in a computer-readable storage media in the form of a program module. The instruction, when executed by a processor (e.g., the processor 120), may cause the one or more processors to perform a function corresponding to the instruction. The computer-readable storage media, for example, may be the memory 1130.

A computer-readable recording medium may include a hard disk, a magnetic media, a floppy disk, a magnetic media (e.g., a magnetic tape), an optical media (e.g., a compact disc ROM (CD-ROM), a DVD, or a magneto-optical media (e.g., a floptical disk)), and hardware devices (e.g., a ROM, a RAM, or a flash memory). Also, the program instructions may include not only a mechanical code such as things generated by a compiler but also a high-level language code executable on a computer using an interpreter. The above hardware unit may be configured to operate via one or more software modules for performing an operation of the present disclosure, and vice versa.

According to various embodimentsof the present disclosure, the computer-readable recording medium may store a program for performing an operation of obtaining data in which an authentication is required when accessed and an operation of storing at least a part of the data in an embedded secure element (eSE) connected to a processor through a physical channel.

The screen outputting method according to various embodiments of the present disclosure may provide a UI for interacting with a user based on a sensor mounted in an electronic device and information about the vicinity of a user and state of a user such as a setting and an input method of a user, or the like.

The screen outputting method according to various embodiments of the present disclosure may provide various screen effects in real time through a UI for interacting with a user and may provide an interesting user experience to a user. Accordingly, visibility and readability may be improved.

A module or a program module according to various embodiments may include at least one of the above elements, or a part of the above elements may be omitted, or additional other elements may be further included. Operations performed by a module, a program module, or other elements according to various embodiments of the present disclosure may be executed sequentially, in parallel, repeatedly, or in a heuristic method. Also, a part of operations may be executed in different sequences, omitted, or other operations may be added.

The above embodiments of the present disclosure are illustrative and not limitative. Various alternatives and equivalents are possible. Other additions, subtractions, or modifications are obvious in view of the present disclosure and are intended to fall within the scope of the appended claims.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. A screen outputting method performed at an electronic device, the screen outputting method comprising:
dividing a display of the electronic device into a first area and a second area;
outputting a first content to the first area and outputting a second content to the second area;
receiving an input associated with the first area; and
changing a method of outputting the second content, based on an attribute of the input.

2. The method of claim 1,wherein the receiving of the input comprises:
receiving at least one of an input by a user or an input about a state of the electronic device or surroundings of a user recognized through a sensor module.

3. The method of claim 1,wherein the changing of the method of outputting the second content comprises:
stepwise changing the method of outputting the second content, based on a change of the input.

4. The method of claim 1,wherein the changing of the method of outputting the second content comprises:
changing a size of the second area based on a change of the input.

5. The method of claim 4,wherein the changing of the size comprises:
shifting a boundary line between the first area and the second area; and
changing the size of the second area.

6. The method of claim 1,wherein the changing of the method of outputting the second content comprises:
performing an image processing with respect to the second content; and
outputting the processed second content.

7. The method of claim 6,wherein the performing of the image processing comprises:
performing at least one of a blending effect, a composition effect, a masking effect, or a geometric processing effect.

8. The method of claim 7,wherein the blending effect comprisesat least one of a generation or removal effect of a noise, a flow effect, a transparency, a sharpness, brightness, saturation, a contrast, or a colonization effect.

9. The method of claim 7,wherein the performing of the image processing comprises:
changing at least one of brightness or saturation by applying different color filters to the second content based on the input.

10. The method of claim 7,wherein the performing of the image processing comprises:
performing a composition operation with respect to a source imageof the second area and an image of a part, which corresponds to the second area, of the first content or masking the image.

11. The method of claim 1,wherein the first and second contents are contents outputted according to operations of different applications.

12. An electronic device comprising:
a display;
a memory; and
a processor electrically connected to the display and the memory, the processor configured to:
dividean area of the display into a first area and a second area,
outputa first content to the first area,
outputa second content to the second area, and
change a method of outputting the second content based on an attribute of the inputif an input associated with the first area is received.

13. The electronic device of claim 12, further comprising:
a sensor module,
wherein the processoris further configured to receive an input by a user or an input about a state of the electronic device or surroundings of a user recognized through a sensor module.

14. The electronic device of claim 12,wherein the processoris further configured to stepwisechange the method of outputting the second content based on a change of the input.

15. The electronic device of claim 12,wherein the processoris further configured to change a size of the second area based on a change of the input.
